# EUROPÄISCHE PATENTSCHRIFT

(11) **EP 3 455 785 B1**
(45) Veröffentlichungstag und Bekanntmachung des Hinweises auf die Patenterteilung: **08.07.2020**
(21) Anmeldenummer: 17722423.5
(22) Anmeldetag: 08.05.2017
(51) Int. Cl.: G06K 9/00

(54) **VERFAHREN ZUR ERFASSUNG VON VERKEHRSZEICHEN**
METHOD FOR TRAFFIC SIGN DETECTION
PROCÉDÉ DE DÉTECTION DE LA CIRCULATION SIGNE

(30) Priorität: 10.05.2016 DE 102016208025
(43) Veröffentlichungstag der Anmeldung: 20.03.2019
(73) Patentinhaber: Continental Automotive GmbH, 30165 Hannover (DE)
(72) Erfinder: LINDEMANN, Robert, 65193 Wiesbaden (DE)
(86) Internationale Anmeldenummer: PCT/EP2017/060894
(87) Internationale Veröffentlichungsnummer: WO 2017/194457

(56) Entgegenhaltungen:
- EP-B1- 2 195 613
- DE-A1-102009 018 073
- DE-A1-102014 201 158
- US-B2- 8 041 080
- Sérgio R Madeira ET AL: "AUTOMATIC TRAFFIC SIGNS INVENTORY USING A MOBILE MAPPING SYSTEM For GIS applications", , 1. Januar 2005 (2005-01-01), XP055395052, Gefunden im Internet: URL:https://pdfs.semanticscholar.org/1a8a/ 7193d8b83cfc73465e23e416b4bd34fdee76.pdf?_ ga=2.141784176.395923683.1501578861-655833 872.1499160678 [gefunden am 2017-08-01]
- SEGVIC S ET AL: "A computer vision assisted geoinformation inventory for traffic infrastructure", INTELLIGENT TRANSPORTATION SYSTEMS (ITSC), 2010 13TH INTERNATIONAL IEEE CONFERENCE ON, IEEE, PISCATAWAY, NJ, USA, 19. September 2010 (2010-09-19), Seiten 66-73, XP031792535, ISBN: 978-1-4244-7657-2

## Beschreibung

### Gebiet der Technik

Die vorliegende Erfindung bezieht sich auf die Erfassung des Inhalts und des Aufstellorts von Verkehrszeichen.

### Stand der Technik

Die Erfassung von Verkehrszeichen mittels Kameras zur unmittelbaren Anzeige und/oder zur Erzeugung und Aktualisierung von elektronischen Straßenkarten ist heute bereits Stand der Technik. Jedoch lässt sich, insbesondere wenn mittels Kameras und Geo-Lokalisation erfasste Verkehrszeichen an eine fahrzeugexterne Datenbank gesendet werden, relativ einfach eine gegenwärtige Fahrtrichtung und Position des erfassenden Fahrzeugs bestimmen, und möglicherweise eine zukünftige Position oder Fahrstrecke schätzen. Dies kann von den Fahrern der erfassenden Fahrzeuge als Gefährdung oder Einschränkung der Privatsphäre aufgefasst werden und dazu führen, dass eine solche Funktionalität nicht akzeptiert wird, wodurch die fahrzeugexterne Datenbank nicht so häufig mit aktuellen Daten versorgt wird.

DE 10 2009 018 073 A1 betrifft ein Verfahren zum Aktualisieren einer geografischen Datenbank, bei dem basierend auf von einem Fahrzeugnavigationssystem gelieferter Information festgestellt wird, ob sich ein Fahrzeug in einer Position auf einer Straße befindet. Unter Verwendung einer im Fahrzeug montierten Kamera wird ein geografisch kodiertes Bild erzeugt, falls, gemäß der vom Fahrzeugnavigationssystem gelieferten Information, sich das Fahrzeug nicht in einer Position auf der Straße befindet. Das mit Hilfe der im Fahrzeug montierten Kamera erzeugte, geografisch kodierte Bild wird analysiert, um festzustellen, ob eine Aktualisierung der geografischen Datenbank erforderlich ist. Sergio R Madeira ET AL: " AUTOMATIC TRAFFIC SIGNS INVENTORY USING A MOBILE MAPPING SYSTEM For GIS applications ", 1. Januar 2005 (2005-01-01), XP055395052 betrifft ein System zur schnellen Erfassung von Verkehrszeichen, einschließlich automatischer Zeichenerkennung und Erfassung der Position. Die Erfassung basiert auf einer Straßenvermessung mittels eines Fahrzeugs mit einer Kamera.

### Problem

Die derzeit übliche Kameraanordnung zur Verkehrszeichenerfassung kann nur in Fahrtrichtung voraus befindliche Verkehrszeichen erkennen.

Viele Fahrzeugführer möchten zudem vermeiden, dass aus während der Fahrt erfassten Verkehrszeichen und anderen Fahrwegeigenschaften individuelle Fahrprofile erstellt oder häufig besuchte Aufenthaltsorte ermittelt werden, und könnten einer Teilnahme an der Erfassung widersprechen. Eine mögliche Lösung für dieses Problem ist in deutschen Patentanmeldung mit dem Aktenzeichen 10 2016 207 984.0 gezeigt, die jedoch bei der Erfassung von jeweils nur für eine Richtung geltenden Verkehrszeichen nur eingeschränkt funktioniert bzw. die Übertragung von Fahrwegdaten in diesem Fall so lange verzögern kann, dass diese nicht mehr besonders aktuell sind.

### Begriffsbestimmung

Im Kontext dieser Beschreibung bezeichnet eine periodische Bestimmung einer geographischen Position des Fahrzeugs eine Bestimmung der Fahrzeugposition dergestalt, dass Zeitpunkte oder Orte der periodischen Erfassung der Fahrzeugposition für eine Aufzeichnung der Fahrstrecke in einer digitalen Karte ausreichend nah beieinander liegen sind und dazwischen liegende Fahrzeugpositionen ggf. durch Interpolation ermittelt werden können. Eine Interpolation kann dabei beispielsweise unter Verwendung u.a. von Daten eines Wegstreckenzählers oder eines Geschwindigkeitsmessers und einer Zeitdauer zu einem oder mehreren Zeitpunkten der Positionsbestimmung erfolgen. Eine kontinuierliche bzw. quasi-kontinuierliche Bestimmung der geographischen Position kann auch durch eine periodische Bestimmung der Fahrzeugposition in hinreichend kurzen Zeitabständen und anschließende Interpolation erfolgen.

### Zusammenfassung der Erfindung

Es ist eine Aufgabe der vorliegenden Erfindung, weitere in Fahrzeugen vorgesehene Sensoren zur Erstellung und Aktualisierung von elektronischen Straßenkarten zu verwenden und die Erstellung von Fahrprofilen aus entsprechenden, an eine fahrzeugexterne Datenbank übertragenen Daten zu erschweren.

### Lösung

Die bei der herkömmlichen Erfassung von Verkehrszeichen mittels einer aus Fahrzeugsicht nach vorne gerichteten Kamera gegebene Beschränkung der Erfassung auf in Fahrtrichtung voraus befindliche Verkehrszeichen und die eindeutige Verknüpfung zwischen nur für eine Richtung geltenden Verkehrszeichen und der Fahrtrichtung des erfassenden Fahrzeugs werden dadurch aufgehoben, dass eine aus Fahrzeugsicht nach hinten gerichtete Kamera, beispielsweise eine Rückfahrkamera des Fahrzeugs, auch während der Vorwärtsfahrt betrieben wird, um auch für die Gegenrichtung geltende, sich zum Zeitpunkt der Erkennung hinter dem Fahrzeug befindliche Verkehrszeichen und deren Position zu erfassen, und dass daraus generierte Datensätze zusammen mit den mittels der Frontkamera generierten Datensätzen an die Datenbank gesendet werden. Die für die nach vorne weisende Kamera bekannten Verfahren zur Detektion und Erfassung von Verkehrszeichen können in analoger Weise für die Detektion und Erfassung von Verkehrszeichen in Bildern einer nach hinten weisenden Kamera genutzt werden, ebenso bekannte Verfahren zur Bestimmung der geographischen Position des Fahrzeugs.

Gemäß einem Aspekt des erfindungsgemäßen Verfahrens zur Erfassung von Verkehrszeichen und deren Aufstellort durch ein fahrendes Fahrzeug wird periodisch oder kontinuierlich die geographische Position des Fahrzeugs erfasst, und eine aus Fahrzeugsicht nach hinten gerichtete erste Kamera nimmt Bilder auf. Die Bilder der ersten Kamera werden einer Verkehrszeichenerkennung zugeführt. Wenn ein Verkehrszeichen erkannt wurde, werden das erkannte Verkehrszeichen repräsentierende Informationen und eine zugehörige geographische Position in einer Datenbank gespeichert. Die das Verkehrszeichen repräsentierenden Informationen umfassen mindestens den semantischen Inhalt des Verkehrszeichens, also seine Bedeutung für einen Fahrer des Fahrzeugs.

Der Aufstellort des Verkehrszeichens kann beispielsweise aus einer Veränderung des Orts, an dem das Verkehrszeichen in aufeinanderfolgenden Bildern der Kamera abgebildet ist, der Position und Geschwindigkeit des Fahrzeugs, der bekannten Einbaulage und den bekannten optischen Eigenschaften der Kamera bestimmt werden. Wenn das Verkehrszeichen in einer Kurve liegt, kann auch ein Lenkwinkel bei der Bestimmung der Position berücksichtigt werden, weil sich, abhängig von dem Kurvenradius und der Richtung der Kurve, die Position des Verkehrszeichens in aufeinanderfolgenden Bildern bei gleicher Geschwindigkeit unterschiedlich stark verändern kann. Auch ein seitlicher Abstand des Verkehrszeichens von der Fahrbahn und seine Höhe kann so ermittelt werden.

Die erste Kamera kann bspw. eine in einem Fahrzeug ohnehin vorhandene Kamera zur Überwachung einer Rückwärtsfahrt sein, deren Bilder einem Fahrer bei Rückwärtsfahrt auf einer Anzeige angezeigt werden. Bei der erfindungsgemäßen Verwendung der Kamera während der Vorwärtsfahrt werden dabei vorzugsweise keine Bilder der Kamera auf der Anzeige angezeigt, um den Fahrer nicht abzulenken.

Eine aus Fahrzeugsicht nach vorne gerichtete, zweite Kamera des Fahrzeugs nimmt während der Fahrt Bilder auf, welche einer Bilderkennung zugeführt werden. Die Bilderkennung analysiert eine im Bereich der Gegenfahrbahn liegende Bildregion auf Objekte mit der typischen Form von Verkehrszeichen. Der Inhalt von Verkehrszeichen ist nicht zwingend mit der Form eindeutig verknüpft, so dass insbesondere bei von hinten erkannten Verkehrszeichen nicht immer auf den für einen Fahrer eines Fahrzeugs relevanten Inhalt des Verkehrszeichens geschlossen werden kann. Um die Wiedererkennung des Kandidaten in den Bildern der ersten Kamera zu erleichtern und die Erkennung des Verkehrszeichens zu beschleunigen wird abgeschätzt, zu welchem Zeitpunkt der Kandidat in den Erfassungsbereich der ersten Kamera eintritt und an welcher Stelle im Bild der Eintritt erfolgt.

Gemäß einer Ausgestaltung des Verfahrens wird zur Abschätzung ein anhand der Form erkannter Kandidat für ein Verkehrszeichen markiert und seine Position während der weiteren Annäherung des Fahrzeugs an den Kandidaten in den Bildern der zweiten Kamera verfolgt. Da die Erfassungsbereiche, die Einbauorte und die optischen Eigenschaften der nach vorne weisenden zweiten Kamera und der nach hinten weisenden ersten Kamera bekannt sind, kann beispielsweise unter Zuhilfenahme der aktuellen Fahrgeschwindigkeit und ggf. eines Lenkwinkels abgeschätzt werden, zu welchem Zeitpunkt ein Kandidat, der den Erfassungsbereich der zweiten Kamera verlässt, in den Erfassungsbereich der ersten Kamera eintritt. Die Abschätzung kann auf ähnliche Weise erfolgen wie zuvor für die Ermittlung des Aufstellorts beschrieben. Wenn der seitliche Abstand und die Höhe des Verkehrszeichens durch die Schätzung bekannt sind, kann auch die Stelle im Bild, an der der Kandidat beim Eintreten in den Erfassungsbereich der ersten Kamera voraussichtlich abgebildet sein wird, geschätzt werden. Die Wiedererkennung des Kandidaten in von der Rückfahrkamera aufgenommenen Bildern kann somit bereits an der richtigen Stelle im Bild beginnen und beschleunigt werden, und es kann schneller mit der Validierung des Kandidaten als Verkehrszeichen und mit der Erkennung des Inhalts des Verkehrszeichens begonnen werden. Dies ist insbesondere bei höheren Fahrgeschwindigkeiten des Fahrzeugs von Vorteil, weil durch die zunehmende Entfernung des Fahrzeugs von dem feststehenden Verkehrszeichen das Verkehrszeichen durch immer weniger Pixel in aufeinander folgenden Bildern der Rückfahrkamera abgebildet wird, und dadurch die Erkennungsgenauigkeit abnehmen kann. Dies gilt umso mehr, wenn der Kandidat in einigen der Bilder durch Fahrzeuge des Gegenverkehrs ganz oder teilweise verdeckt ist. Auch bei dieser Ausgestaltung kann der Lenkwinkel erfasst werden, um die bei Kurvenfahrt unterschiedlichen Zeitabstände zwischen Verlassen des Erfassungsbereichs der zweiten Kamera und Eintreten in den Erfassungsbereichs der ersten Kamera zu berücksichtigen. So tritt der Kandidat, bei Rechtsverkehr, beispielsweise in Rechtskurven schneller in den Erfassungsbereich der nach hinten gerichteten Kamera ein als in Linkskurven.

Gemäß einer Ausgestaltung des Verfahrens beginnt die erste Kamera erst ab dem Zeitpunkt mit der Aufnahme von Bildern und/oder mit der Durchführung der Verkehrszeichenerkennung, an dem ein Kandidat in ihren Erfassungsbereich eintritt. Der Ausdruck "ab dem Zeitpunkt" umfasst dabei auch eine Aktivierung der Kamera bzw. der Verkehrszeichenerkennung bereits kurz vor dem Eintreten des Kandidaten in den Erfassungsbereich der ersten Kamera. Diese vorzeitige Aktivierung kann, abhängig von der für eine volle Betriebsbereitschaft der am Verfahren beteiligten Komponenten benötigten Zeit, erforderlich sein, um sicherzustellen, dass die Kamera und ggf. die Vorrichtung zur Verkehrszeichenerkennung rechtzeitig beim Eintritt des Kandidaten in den Erfassungsbereich bereit und voll funktionsfähig sind. Dieser Aspekt des Verfahrens kann vorteilhaft sein, wenn die Aktivierung der Kamera und der Vorrichtung zur Verkehrszeichenerkennung sowie die Durchführung der Verkehrszeichenerkennung weniger Zeit benötigen, als zwischen dem nacheinander erfolgenden Eintreten zweier Kandidaten in den Erfassungsbereich der nach hinten gerichteten Kamera vergeht. Dadurch ist es möglich, die Kamera bzw. die Vorrichtung zur Verkehrszeichenerkennung nur dann zu betreiben, wenn tatsächlich ein Verkehrszeichen zu erkennen ist, und es kann durch Versetzen der Kamera bzw. der Erkennungsvorrichtung in einen Ruhezustand Energie eingespart werden.

Gemäß einer Ausgestaltung des vorstehend dargestellten Aspekts wird neben der Kamera auch die Bestimmung der geographischen Position des Fahrzeugs erst dann aktiviert, wenn ein Kandidat von der zweiten Kamera und der Bilderkennung identifiziert wurde. Dieser Aspekt kann angewendet werden, wenn eine Positionsbestimmung nach der Aktivierung hinreichend schnell erfolgt. Wenn die Positionsbestimmung für einen durch die Bilderkennung für Bilder der ersten Kamera erkanntes Verkehrszeichen erfolgt bzw. abgeschlossen ist, kann die Vorrichtung zur Positionsbestimmung wieder deaktiviert bzw. in einen energiesparenderen Betriebsmodus versetzt werden.

Gemäß einer Ausgestaltung des Verfahrens wird aus der Zeitdauer, während der der Kandidat weder im Erfassungsbereich der zweiten Kamera noch im Erfassungsbereich der ersten Kamera lag, der tatsächliche Aufstellort eines validierten Verkehrszeichens bestimmt. Für diese Bestimmung werden die bekannten optischen Eigenschaften der ersten und der zweiten Kamera, deren Einbauorte im Fahrzeug, der bekannte Abstand zwischen den Einbauorten der Kameras, die Fahrgeschwindigkeit und die während der Fahrt ermittelten geographischen Positionen des Fahrzeugs verwendet. Dieser Aspekt nutzt die Tatsache aus, dass, bei bekannter geographischer Position des Fahrzeugs, die Position eines genau seitlich zu dem Fahrzeug befindlichen Objekts genauer bestimmbar ist, als wenn das Objekt sich seitlich vor oder hinter dem Fahrzeug befindet. Bei einem seitlich vor oder hinter dem Fahrzeug befindlichen Objekt ergibt sich aus einer möglicherweise ungenauen Berechnung des Winkels zwischen der Fahrzeug-Längsachse und dem Objekt und einer möglicherweise nicht exakt bestimmten Entfernung zwischen Fahrzeug und Objekt ein zusätzlicher Fehler bei der Bestimmung der Position des Objekts aus der bekannten Position des Fahrzeugs.

Gemäß einer Ausgestaltung des Verfahrens erfolgt die Speicherung der ein erkanntes Verkehrszeichen repräsentierenden Informationen und der zugehörigen geographischen Position in einer fahrzeuginternen oder einer fahrzeugexternen Datenbank. Bei Speicherung in einer fahrzeugexternen Datenbank erfolgt eine Kommunikation mit der fahrzeugexternen Datenbank über eine drahtlose Kommunikationsverbindung.

Eine in einem Fahrzeug angeordnete Vorrichtung zur Erfassung von Verkehrszeichen und deren Aufstellort gemäß dem Verfahren umfasst Mittel zur periodischen oder kontinuierliche Bestimmung einer geographischen Position des Fahrzeugs, eine erste, aus Fahrzeugsicht nach hinten gerichtete Kamera, Mittel zur Durchführung einer Verkehrszeichenerkennung für die Bilder der ersten Kamera, und Mittel zur Speicherung von Verkehrszeichen repräsentierenden Informationen und zugehörigen geographischen Positionen.

Eine in einem Fahrzeug angeordnete Vorrichtung zur Erfassung von Verkehrszeichen und deren Aufstellort gemäß dem Verfahren umfasst zusätzlich zu der vorstehend beschriebenen Vorrichtung eine zweite, aus Fahrzeugsicht nach vorne gerichtete Kamera, Mittel zur Durchführung einer Bilderkennung in einem im Bereich der Gegenfahrbahn liegenden Bildbereich der Bilder der zweiten Kamera, und Mittel zur Abschätzung, zu welchem Zeitpunkt ein Kandidat in den Erfassungsbereich der ersten Kamera eintritt und an welcher Stelle im Bild der Eintritt erfolgt. Die Mittel zur Durchführung der Bilderkennung sind dazu eingerichtet Objekte, die eine typische Form von Verkehrszeichen haben, als Kandidaten zu markieren.

Bei einer Ausführungsform der Vorrichtung werden auf einer mit der ersten Kamera verbundenen Anzeigeeinheit während der Vorwärtsfahrt des Fahrzeugs keine Bilder der ersten Kamera wiedergegeben. Bei einer Rückwärtsfahrt werden dagegen Bilder der ersten Kamera wiedergegeben, wenn die Kamera auch zur Überwachung der Rückwärtsfahrt in dem Fahrzeug vorgesehen ist.

Grundsätzlich kann das Verfahren auch bei einer Rückwärtsfahrt des Fahrzeugs durchgeführt werden, wenn entlang der rückwärts durchfahrenen Strecke Verkehrszeichen aufgestellt sind. In diesem Fall erfolgt sowohl eine Verkehrszeichenerkennung für die Bilder der ersten Kamera als auch ggf. eine Darstellung der Bilder der ersten Kamera auf einer damit verbundenen Anzeigeeinheit.

Das Verfahren erlaubt es, sowohl für die eigene Fahrbahn geltende Verkehrszeichen als auch für die Gegenfahrbahn geltende Verkehrszeichen zu erfassen. Die Erfassung von für beide Fahrtrichtungen geltenden Verkehrszeichen ergibt bei einer Fahrt einen Gesamt-Datensatz, der bei geeigneter Verarbeitung eine Rekonstruktion einer einzelnen Fahrt erschweren kann.

### Kurze Beschreibung der Zeichnungen

Im Folgenden werden Aspekte der Erfindung mit Bezug auf die Zeichnung beschrieben. In der Zeichnung zeigt
- Fig. 1: ein exemplarisches Bild einer aus Fahrzeugsicht nach vorne weisenden Kamera auf ein für die Gegenrichtung geltendes Verkehrszeichen;
- Fig. 2: ein exemplarisches Bild einer aus Fahrzeugsicht nach hinten weisenden Kamera auf das in Figur 1 gezeigte Verkehrszeichen nach dem Passieren desselben;
- Fig. 3: einen beispielhaften Verfahrensablauf eines Aspekts des erfindungsgemäßen Verfahrens;
- Fig. 4: eine beispielhafte schematische Übersicht einer Vorrichtung zur Durchführung eines oder mehrerer Aspekte des erfindungsgemäßen Verfahrens; und
- Fig. 5a)-d): eine schematische Darstellung einer Straße mit einem Verkehrszeichen zu unterschiedlichen Zeitpunkten während der Durchführung eines Aspekts des erfindungsgemäßen Verfahrens.

### Beschreibung der Ausführungsbeispiele

In den Figuren der Zeichnung sind gleiche oder ähnliche Elemente mit den gleichen Bezugszeichen bezeichnet.

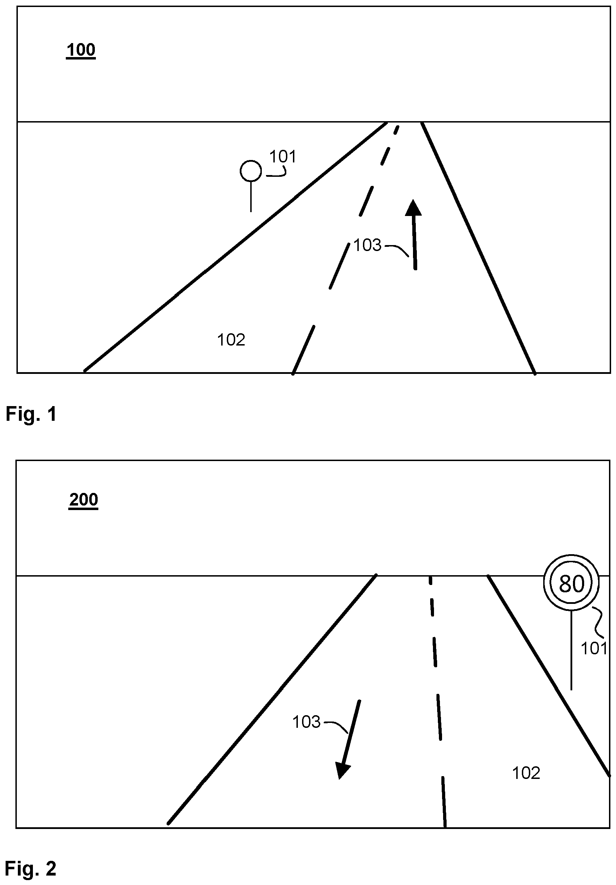

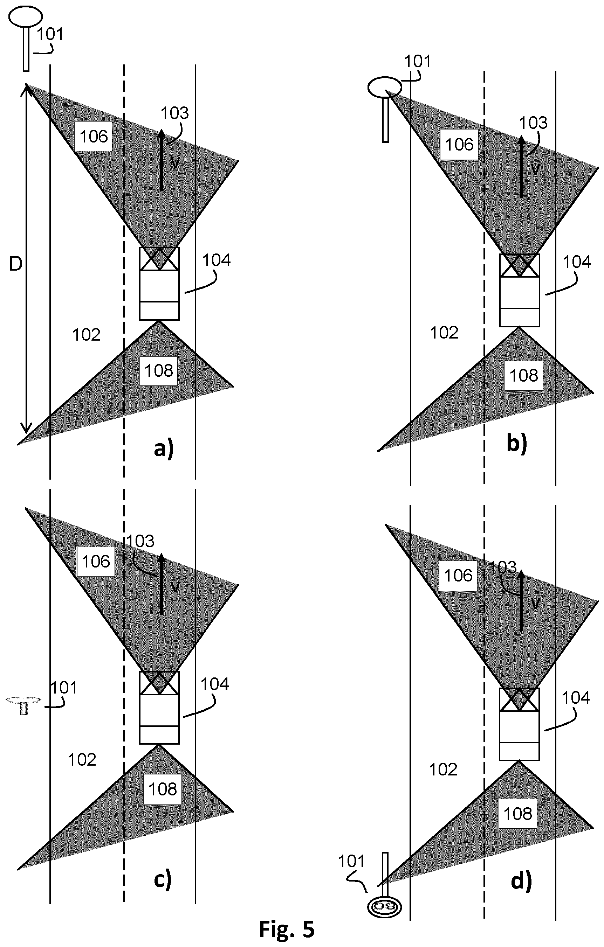

Figur 1 zeigt ein exemplarisches Bild 100 einer aus Fahrzeugsicht nach vorne weisenden Kamera auf ein für die Gegenrichtung geltendes Verkehrszeichen 101. Das in der Figur nicht gezeigte Fahrzeug fährt auf der rechten Fahrspur der Straße 102. Die Fahrtrichtung ist durch den Pfeil 103 angedeutet. Der Inhalt des Verkehrszeichens 101 kann allein anhand seiner Form nicht genau bestimmt werden, weil eine Vielzahl von Verkehrszeichen eine kreisförmige Grundform aufweist. Es kann jedoch als Kandidat für ein mögliches Verkehrszeichen identifiziert werden, zum Beispiel gemäß einem mit Bezug auf Figur 5 genauer beschriebenen Aspekt der Erfindung.

Figur 2 zeigt ein exemplarisches Bild 200 einer aus Fahrzeugsicht nach hinten weisenden Kamera mit dem in Figur 1 gezeigte Verkehrszeichen 101 nach dem Passieren desselben. Das Fahrzeug bewegt sich auf der im Bild links liegenden Fahrbahn der Straße 102 auf den Betrachter zu, angedeutet durch den Pfeil 103. Der Inhalt des Verkehrszeichens 101 ist jetzt klar erkennbar - es zeigt eine Geschwindigkeitsbeschränkung auf 80 km/h an. Ein auf das Bild angewendeter Prozess zur Verkehrszeichenerkennung kann somit das für die Gegenrichtung geltende Verkehrszeichen identifizieren und mit einem während der Vorbeifahrt des Fahrzeugs erfassten Aufstellort verknüpfen. Dieser Datensatz kann dann in einer Datenbank gespeichert und weiterverarbeitet werden.

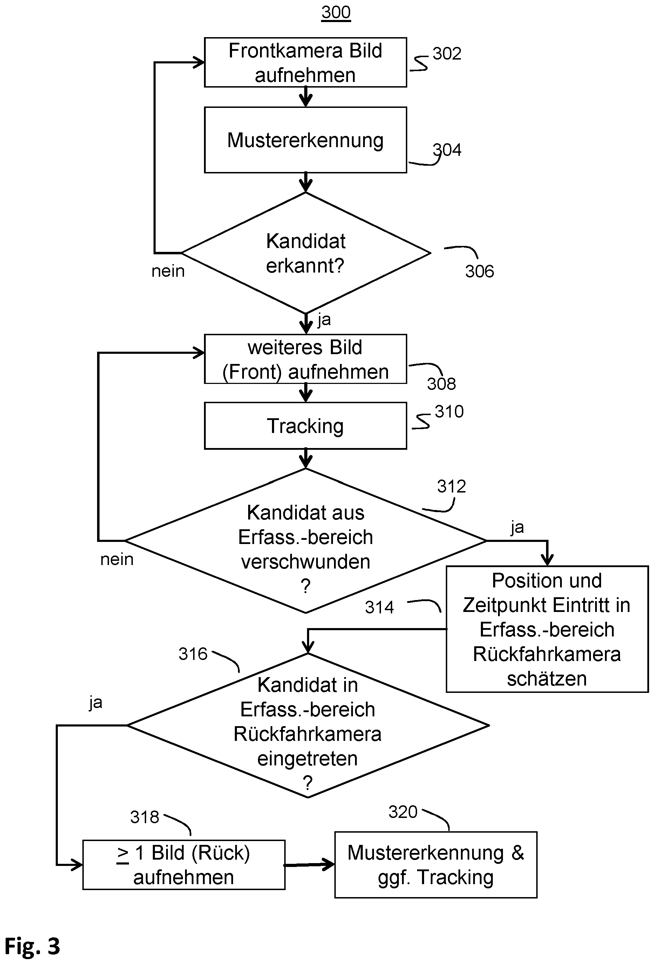

Figur 3 zeigt einen beispielhaften Verfahrensablauf eines Aspekts des erfindungsgemäßen Verfahrens 300. In Schritt 302 nimmt die nach vorne gerichtete Kamera 302 mindestens ein Bild auf, das in Schritt 304 einer Mustererkennung zugeführt wird. Die Mustererkennung überprüft das Bild auf an der gegenüberliegenden Fahrbahn aufgestellte, für die Gegenrichtung geltende Verkehrszeichen. Wenn ein möglicher Kandidat erkannt wurde, "ja"-Zweig von Schritt 306, werden ein oder mehrere weitere Bilder mit der Kamera aufgenommen, Schritt 308, in denen der Kandidat detektiert und eine jeweilige Veränderung seiner Position im Bildausschnitt nachverfolgt wird (Tracking), Schritt 310. Wenn kein Kandidat erkannt wurde, "nein"-Zweig von Schritt werden ebenfalls weitere Bilder mit der Kamera aufgenommen, die jedoch der Mustererkennung in Schritt 304 zugeführt werden. Es ist anzumerken, dass bei Erkennung eines Kandidaten in Schritt 306 weitere Bilder auch der Mustererkennung in Schritt 304 zugeführt werden können, bspw. um weitere Kandidaten zu erkennen, während ein oder mehrere zuvor erkannte Kandidaten nachverfolgt werden. Das Aufnehmen von weiteren Bildern und das Tracking werden für jeden Kandidaten fortgesetzt, "nein"-Zweig von Schritt 312, bis er sich nicht mehr in dem Erfassungsbereich der nach vorne gerichteten Kamera befindet, "ja"-Zweig von Schritt 312. In diesem Fall werden die Geo-Position und der Zeitpunkt des Verlassens des Erfassungsbereichs der nach vorne gerichteten Kamera gespeichert und die Geo-Position und der Zeitpunkt des Eintritts des Kandidaten in den Erfassungsbereich der nach hinten gerichteten Kamera geschätzt, Schritt 314. Wenn der Kandidat nach der Schätzung in den Erfassungsbereich der nach hinten gerichteten Kamera eingetreten ist, "ja"-Zweig von Schritt 316, wird mindestens ein Bild mit der nach hinten gerichteten Kamera aufgenommen, welches einer Mustererkennung zugeführt wird, Schritt 320. Anderenfalls wird weiter gewartet (nicht in der Figur dargestellt) . Wenn die Mustererkennung 320 den Kandidaten als Verkehrszeichen bestätigt, wird der Inhalt des nunmehr sichtbaren Verkehrszeichens erkannt und einem zugehörigen Aufstellort zugeordnet (nicht in der Figur gezeigt). Für die Bestimmung des Aufstellorts und für andere Zwecke kann auch nach der Erkennung des Verkehrszeichens ein Tracking fortgeführt werden.

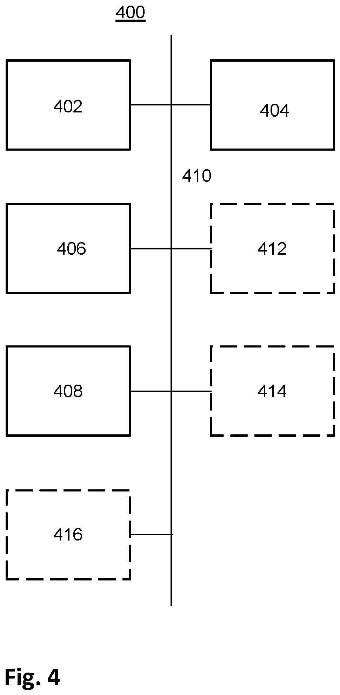

Figur 4 zeigt eine beispielhafte schematische Übersicht einer Vorrichtung 400 zur Durchführung eines oder mehrerer Aspekte des erfindungsgemäßen Verfahrens. Mittel 402 zur periodischen oder kontinuierliche Bestimmung einer geographischen Position des Fahrzeugs, eine erste, aus Fahrzeugsicht nach hinten gerichtete Kamera 404, Mittel 406 zur Durchführung einer Verkehrszeichenerkennung für die Bilder der ersten Kamera und Mittel 408 zur Speicherung von Verkehrszeichen repräsentierenden Informationen und zugehörigen geographischen Positionen sind mittels mindestens einem Datenbus 410 kommunikativ verbunden. Die Vorrichtung weist optional, für einige Aspekte des Verfahrens, eine zweite, aus Fahrzeugsicht nach vorne gerichtete Kamera 412, Mittel 414 zur Durchführung einer Bilderkennung in einem im Bereich der Gegenfahrbahn liegenden Bildbereich der Bilder der zweiten Kamera, und Mittel 416 zur Abschätzung, zu welchem Zeitpunkt ein Kandidat in den Erfassungsbereich der ersten Kamera eintritt und an welcher Stelle im Bild der Eintritt erfolgt, auf. Die optional vorgesehenen Mittel sind in der Figur mit gestrichelten Linien dargestellt.

Ein oder mehrere der vorstehend genannten Mittel können ein oder mehrere mit einem entsprechenden Arbeitsspeicher und ggf. nicht-flüchtigen Speicher verbundene Mikroprozessoren aufweisen. Der nicht-flüchtige Speicher speichert dabei Computer-Programmbefehle die, wenn sie von dem Mikroprozessor im Zugriff auf den Arbeitsspeicher ausgeführt werden, die Funktion des Mittels bereitstellen bzw. die von dem Mittel auszuführenden Verfahrensschritte durchführen. Mehrere der Mittel können dabei durch jeweilige, von demselben Mikroprozessor ausgeführte Sätze von Computer-Programmbefehlen gebildet sein. Verfahrensschritte, die gleichermaßen auf Bilder der ersten Kamera und der zweiten Kamera angewendet oder für diese durchgeführt werden, können auch in einem einzigen, für diesen Zweck geeigneten Mittel ausgeführt werden, bspw. durch sequentielle Bearbeitung oder durch abwechselnde Bearbeitung einzelner Teilschritte oder Teilbilder.

Die einzelnen Bilder der Figur 5 a)-d) zeigen jeweils eine schematische Darstellung einer Straße mit einem Fahrzeug und einem Verkehrszeichen zu unterschiedlichen Zeitpunkten während der Durchführung eines Aspekts des erfindungsgemäßen Verfahrens.

In Figur 5 a) fährt ein Fahrzeug 104 auf der rechten Fahrspur einer Straße 102. Die Fahrtrichtung ist durch den Pfeil 103 angedeutet, der Index v an dem Pfeil 103 repräsentiert eine Fahrgeschwindigkeit des Fahrzeugs 104. Grau hinterlegte Felder 106 und 108 deuten die Erfassungsbereiche von jeweils einer in Fahrtrichtung nach vorne bzw. nach hinten gerichteten, nicht in der Figur gezeigten Kamera des Fahrzeugs an. Die Erfassungsbereiche 106 und 108 erstrecken sich in der Verlängerung der seitlichen Begrenzungslinien über den grau hinterlegten Bereich hinaus. In dem Erfassungsbereich 106 der nach vorne gerichteten Kamera ist ein für die Gegenrichtung geltendes Verkehrszeichen 101 neben der Fahrbahn aufgestellt, dessen Inhalt von der Rückseite gesehen nicht eindeutig bestimmt werden kann. Gemäß einem Aspekt des Verfahrens wird das Verkehrszeichen als Kandidat markiert und in folgenden Bildern verfolgt, d.h. seine jeweilige Position in einem jeweiligen neuesten Bild wird bestimmt.

In Figur 5 b) hat sich das Fahrzeug 104 dem Verkehrszeichen 101 so weit genähert, dass es nicht mehr vollständig im Erfassungsbereich 106 der nach vorne gerichteten Kamera liegt. Eine weitere Verfolgung der Position des Verkehrszeichens 101 in den Bildern der nach vorne gerichteten Kamera ist nicht mehr möglich bzw. wird in Kürze nicht mehr möglich sein. Aus dem bisherigen Verlauf der Verfolgung des Verkehrszeichens 101 in den Bildern der nach vorne gerichteten Kamera und bekannten optischen Eigenschaften und Einbauorten der Kameras kann geschätzt werden, zu welchem Zeitpunkt das Verkehrszeichen 101 in den Erfassungsbereich 108 der nach hinten gerichteten Kamera eintreten wird, und auch an welcher Stelle in deren Bild. Die Winkel der Erfassungsbereiche 106 und 108 bezogen auf eine Längsachse des Fahrzeugs sind bekannt. Aus der ebenfalls bekannten Distanz zwischen den beiden Kameras und einer Abschätzung des seitlichen Abstands des Verkehrszeichens von dem Fahrzeug kann eine Distanz D ermittelt werden die zurückgelegt werden muss, bevor das Verkehrszeichen 101 in den Erfassungsbereich der nach hinten gerichteten Kamera eintritt. Die Distanz D ist beispielhaft in Figur 5 a) eingezeichnet. Der seitliche Abstand des Verkehrszeichens 101 vom Fahrzeug 104 kann bspw. aus der Veränderung der Position des Kandidaten über zwei oder mehr aufeinanderfolgende Bilder der nach vorne gerichteten Kamera, dem bekannten zeitlichen Abstand zwischen den Bildern, den bekannten optischen Eigenschaften der Kamera und der Fahrgeschwindigkeit des Fahrzeugs bestimmt werden. Bei nicht gerade verlaufendem Fahrweg kann auch ein entsprechender Lenkwinkel berücksichtigt werden (nicht in der Figur gezeigt).

In Figur 5 d) ist das Fahrzeug 104 an dem Verkehrszeichen 101 vorbeigefahren, und das Verkehrszeichen 101 ist in den Erfassungsbereich der nach hinten gerichteten Kamera eingetreten. Der Inhalt des Verkehrszeichens ist jetzt auf deren Bildern erkennbar und kann mittels einer nicht in der Figur gezeigten Vorrichtung zur Verkehrszeichenerkennung bestimmt werden. Der Aufstellort des Verkehrszeichens 101 kann entweder aus den bekannten optischen Eigenschaften der nach vorne oder der nach hinten gerichteten Kamera und der bekannten geographischen Position des Fahrzeugs bestimmt werden, z.B. für den Kandidaten beim Verlassen des Erfassungsbereiches der nach vorne gerichteten Kamera, oder für den Kandidaten beim Eintritt in den Erfassungsbereich der nach hinten gerichteten Kamera. Sobald eine Verkehrszeichenerkennung erfolgreich durchgeführt wurde, kann die Position des den nunmehr bestätigten Kandidaten dem Verkehrszeichen zugeordnet werden.

Der in der Figur 5 c) gezeigte Zeitpunkt liegt vor dem in der Figur 5 d) gezeigten Zeitpunkt. In Figur 5 c) ist das Fahrzeug 104 bei der Vorbeifahrt erst auf der Höhe des Verkehrszeichens 101 angekommen, und das Verkehrszeichen 101 liegt in keinem der Erfassungsbereiche der Kameras. Jedoch wurde das Verkehrszeichen 101 als Kandidat identifiziert, bevor es aus dem Erfassungsbereich der nach vorne gerichteten Kamera herausgefallen ist. Um eine genaue Position des Verkehrszeichens - nach einer späteren Bestätigung des Kandidaten - festlegen zu können, wird die Zeit gemessen die zwischen dem Verlassen des Erfassungsbereichs der nach vorne gerichteten Kamera und dem Eintritt in den Erfassungsbereich der nach hinten gerichteten Kamera verstreicht. Außerdem wird die Geschwindigkeit während dieser Zeit erfasst, entweder als durchschnittliche Geschwindigkeit, oder als Aufzeichnung von Momentangeschwindigkeiten über die Zeit. Die Öffnungswinkel der Erfassungsbereiche der beiden Kameras sind bekannt. Somit kann ein Zeitpunkt bestimmt werden, zu dem der Kandidat sich seitlich auf Höhe des Fahrzeugs 104 befindet. Die Position des Fahrzeugs zu diesem Zeitpunkt wird bestimmt und gespeichert. Wenn der Kandidat nach dem Eintritt in den Erfassungsbereich der nach hinten gerichteten Kamera als gültiges Verkehrszeichen bestätigt wird, kann ihm die zuvor bestimmte und gespeicherte Position zugeordnet werden.

## Patentansprüche

1. Verfahren zur Erfassung von Verkehrszeichen und deren Aufstellort durch ein fahrendes Fahrzeug, umfassend:
- periodische oder kontinuierliche Bestimmung einer geographischen Position des Fahrzeugs,
- Aufnehmen von Bildern mit einer aus Fahrzeugsicht nach hinten gerichteten ersten Kamera,
- Durchführen einer Verkehrszeichenerkennung für die Bilder der ersten Kamera, und
- wenn ein Verkehrszeichen erkannt wurde, Speichern von das erkannte Verkehrszeichen repräsentierenden Informationen und einer zugehörigen geographischen Position in einer Datenbank, **dadurch gekennzeichnet, dass** das Verfahren außerdem umfasst:
- Aufnehmen von Bildern mit einer aus Fahrzeugsicht nach vorne gerichteten zweiten Kamera,
- Durchführen einer Bilderkennung in einem im Bereich der Gegenfahrbahn liegenden Bildbereich, wobei die Bilderkennung Objekte, die eine typische Form von Verkehrszeichen haben, als Kandidaten markiert,
- Abschätzen, zu welchem Zeitpunkt ein Kandidat in den Erfassungsbereich der ersten Kamera eintritt und an welcher Stelle im Bild der Eintritt erfolgt.

2. Verfahren nach Anspruch 1, wobei das Abschätzen, zu welchem Zeitpunkt Kandidat in den Erfassungsbereich der ersten Kamera eintritt umfasst:
- Verfolgen der Position des Kandidaten in den Bildern der zweiten Kamera während der weiteren Annäherung des Fahrzeugs an den Kandidaten, und
- Bestimmen eines Zeitpunkts des Eintretens in den Erfassungsbereich der ersten Kamera aus einer Geschwindigkeit des Fahrzeugs und ggf. einem Lenkwinkel des Fahrzeugs, sowie den optischen Eigenschaften der ersten und der zweiten Kamera und deren Einbaupositionen im Fahrzeug.

3. Verfahren nach Anspruch 1 oder 2, **dadurch gekennzeichnet, dass** das Aufnehmen von Bildern mit der ersten Kamera und/oder das Durchführen der Verkehrszeichenerkennung für Bilder der ersten Kamera erst ab dem Zeitpunkt des Eintretens des Kandidaten in den Erfassungsbereich der ersten Kamera betrieben bzw. ausgeführt werden.

4. Verfahren nach einem der Ansprüche 1 bis 3, **dadurch gekennzeichnet, dass** aus der Zeitdauer, während der der Kandidat weder im Erfassungsbereich der zweiten Kamera noch in dem der ersten Kamera lag, den bekannten optischen Eigenschaften der ersten und der zweiten Kamera und deren Einbauorten im Fahrzeug, der Fahrgeschwindigkeit und der während der Fahrt ermittelten geographischen Positionen des Fahrzeugs der tatsächliche Aufstellort eines validierten Verkehrszeichens bestimmt wird.

5. Verfahren nach einem der vorhergehenden Ansprüche, wobei das Speichern in einer fahrzeuginternen Datenbank erfolgt und/oder in einer fahrzeugexternen Datenbank, wobei eine Kommunikation mit der fahrzeugexternen Datenbank über eine drahtlose Kommunikationsverbindung erfolgt.

6. Vorrichtung zur Erfassung von Verkehrszeichen und deren Aufstellort, wobei die Vorrichtung an oder in einem Fahrzeug angeordnet ist, umfassend:
- Mittel zur periodischen oder kontinuierliche Bestimmung einer geographischen Position des Fahrzeugs,
- eine erste, aus Fahrzeugsicht nach hinten gerichtete Kamera,
- Mittel zur Durchführung einer Verkehrszeichenerkennung für die Bilder der ersten Kamera, und
- Mittel zur Speicherung von Verkehrszeichen repräsentierenden Informationen und zugehörigen geographischen Positionen,
- eine zweite, aus Fahrzeugsicht nach vorne gerichtete Kamera,
- Mittel zur Durchführung einer Bilderkennung in einem im Bereich der Gegenfahrbahn liegenden Bildbereich der Bilder der zweiten Kamera, wobei die Bilderkennung Objekte, die eine typische Form von Verkehrszeichen haben, als Kandidaten markiert,
- Mittel zur Abschätzung, zu welchem Zeitpunkt ein Kandidat in den Erfassungsbereich der ersten Kamera eintritt und an welcher Stelle im Bild der Eintritt erfolgt,
wobei die Vorrichtung dazu eingerichtet ist, ein Verfahren nach einem oder mehreren der Ansprüche 1 bis 5 durchzuführen.

7. Vorrichtung nach Anspruch 6, **dadurch gekennzeichnet, dass** eine mit der ersten Kamera verbundene Anzeigeeinheit während einer Vorwärtsfahrt des Fahrzeugs keine Bilder der ersten Kamera wiedergibt.

8. Vorrichtung nach Anspruch 6 oder 7, **dadurch gekennzeichnet, dass** die erste Kamera eine für eine Überwachung einer Rückwärtsfahrt des Fahrzeugs vorgesehene Kamera ist.

## Claims

1. Method for detecting traffic signs and their installation location by a moving vehicle, comprising:
- periodically or continuously determining a geographical position of the vehicle,
- recording images using a first camera directed backwards from the point of view of the vehicle,
- performing traffic sign recognition for the images from the first camera, and
- when a traffic sign has been recognized, storing information representing the recognized traffic sign and an associated geographical position in a database, **characterized in that** the method furthermore comprises:
- recording images using a second camera directed forwards from the point of view of the vehicle,
- performing image recognition in an image region lying in the region of the oncoming lane, wherein the image recognition marks objects that have a typical shape of traffic signs as candidates,
- estimating the time at which a candidate enters the detection range of the first camera and at which point in the image the entry occurs.

2. Method according to Claim 1, wherein estimating the time at which the candidate enters the detection range of the first camera comprises:
- tracking the position of the candidate in the images from the second camera as the vehicle gets closer to the candidate, and
- determining a time of entry into the detection range of the first camera from a speed of the vehicle and possibly a steering angle of the vehicle, and the optical properties of the first and the second camera and their installed positions in the vehicle.

3. Method according to Claim 1 or 2, **characterized in that** recording images using the first camera and/or performing traffic sign recognition for images from the first camera are performed or executed only after the time at which the candidate enters the detection range of the first camera.

4. Method according to one of Claims 1 to 3, **characterized in that** the actual installation location of a validated traffic sign is determined from the duration during which the candidate was neither in the detection range of the second camera nor **in that** of the first camera, the known optical properties of the first and the second camera and their installed locations in the vehicle, the vehicle speed and the geographical positions of the vehicle determined during the journey.

5. Method according to one of the preceding claims, wherein storage is performed in a database inside the vehicle and/or in a database outside the vehicle, wherein communication with the database outside the vehicle takes place via a wireless communication connection.

6. Device for detecting traffic signs and their installation location, wherein the device is arranged on or in a vehicle, comprising:
- means for periodically or continuously determining a geographical position of the vehicle,
- a first camera directed backwards from the point of view of the vehicle,
- means for performing traffic sign recognition for the images from the first camera, and
- means for storing information representing traffic signs and associated geographical positions,
- a second camera directed forwards from the point of view of the vehicle,
- means for performing image recognition in an image region of the images from the second camera lying in the region of the oncoming lane, wherein the image recognition marks objects that have a typical shape of traffic signs as candidates,
- means for estimating the time at which a candidate enters the detection range of the first camera and at which point in the image the entry occurs,
wherein the device is configured so as to perform a method according to one or more of Claims 1 to 5.

7. Device according to Claim 6, **characterized in that** a display unit connected to the first camera does not display any images from the first camera during forward travel of the vehicle.

8. Device according to Claim 6 or 7, **characterized in that** the first camera has a camera provided for monitoring reverse travel of the vehicle.

## Revendications

1. Procédé de détection de panneaux de circulation et de leur lieu d'installation par un véhicule en déplacement, comprenant :
- la détermination périodique ou continue d'une position géographique du véhicule,
- l'enregistrement d'images avec une première caméra dirigée vers l'arrière du point de vue du véhicule,
- la réalisation d'une reconnaissance de panneau de circulation pour les images de la première caméra, et
- lorsqu'un panneau de circulation a été reconnu, la mémorisation des informations représentant le panneau de circulation reconnu et d'une position géographique associée dans une base de données, **caractérisé en ce que** le procédé comprend en outre :
- l'enregistrement d'images avec une deuxième caméra dirigée vers l'avant du point de vue du véhicule,
- la réalisation d'une reconnaissance d'image dans une zone d'image qui se trouve dans la zone de la voie de circulation en sens inverse, la reconnaissance d'image marquant en tant que candidats les objets qui ont une forme type des panneaux de circulation,
- l'estimation de l'instant auquel un candidat pénètre dans la zone de balayage de la première caméra et de l'endroit de l'image auquel s'effectue la pénétration.

2. Procédé selon la revendication 1, l'estimation de l'instant auquel un candidat pénètre dans la zone de balayage de la première caméra comprenant :
- le suivi de la position du candidat dans les images de la deuxième caméra pendant que le véhicule se rapproche davantage des candidats, et
- la détermination d'un instant de la pénétration dans la zone de balayage de la première caméra à partir d'une vitesse du véhicule et éventuellement d'un angle de braquage du véhicule, ainsi que des propriétés optiques de la première et de la deuxième caméra et de leurs positions de montage dans le véhicule.

3. Procédé selon la revendication 1 ou 2, **caractérisé en ce que** l'enregistrement d'images avec la première caméra et/ou la réalisation de la reconnaissance de panneau de circulation pour les images de la première caméra sont engagés ou exécutés seulement à partir de l'instant de la pénétration du candidat dans la zone de balayage de la première caméra.

4. Procédé selon l'une des revendications 1 à 3, **caractérisé en ce que** le lieu d'installation réel d'un panneau de circulation réel est déterminé à partir de la durée pendant laquelle le candidat ne se trouvait ni dans la zone de balayage de la deuxième caméra, ni dans celle de la première caméra, des propriétés optiques connues de la première et de la deuxième caméra et de leurs emplacements de montage dans le véhicule, de la vitesse de déplacement et des positions géographiques du véhicule déterminées pendant le déplacement.

5. Procédé selon l'une des revendications précédentes, la mémorisation étant effectuée dans une base de données interne au véhicule et/ou dans une base de données externe au véhicule, une communication avec la base de données externe au véhicule s'effectuant par le biais d'une liaison de communication sans fil.

6. Dispositif de détection de panneaux de circulation et de leur lieu d'installation, le dispositif étant disposé sur ou dans un véhicule, comprenant :
- des moyens destinés à la détermination périodique ou continue d'une position géographique du véhicule,
- une première caméra dirigée vers l'arrière du point de vue du véhicule,
- des moyens destinés à la réalisation d'une reconnaissance de panneau de circulation pour les images de la première caméra, et
- des moyens destinés à la mémorisation d'informations représentant des panneaux de circulation et de positions géographiques associées,
- une deuxième caméra dirigée vers l'avant du point de vue du véhicule,
- des moyens destinés à la réalisation d'une reconnaissance d'image dans une zone d'image des images de la deuxième caméra qui se trouve dans la zone de la voie de circulation en sens inverse, la reconnaissance d'image marquant en tant que candidats les objets qui ont une forme type des panneaux de circulation,
- des moyens destinés à l'estimation de l'instant auquel un candidat pénètre dans la zone de balayage de la première caméra et de l'endroit de l'image auquel s'effectue la pénétration,
le dispositif étant conçu pour mettre en œuvre un procédé selon l'une ou plusieurs des revendications 1 à 5.

7. Dispositif selon la revendication 6, **caractérisé en ce qu'**une unité d'affichage reliée à la première caméra ne reproduit aucune image de la première caméra pendant une marche avant du véhicule.

8. Dispositif selon la revendication 6 ou 7, **caractérisé en ce que** la première caméra est une caméra conçue pour une surveillance d'une marche arrière du véhicule.
